# EUROPÄISCHE PATENTSCHRIFT

(11) **EP 1 905 977 B1**
(45) Veröffentlichungstag und Bekanntmachung des Hinweises auf die Patenterteilung: **22.07.2015**
(21) Anmeldenummer: 07017071.7
(22) Anmeldetag: 31.08.2007
(51) Int. Cl.: F02B 29/04

(54) **Thermostat-Wärmetauscher-Anordnung, insbesondere für einen Wärmetauscher eines Kraftfahrzeugs**
Thermostat heat exchanger assembly, in particular for a heat exchanger of a motor vehicle
Agencement d'échangeur thermique à thermostat, en particulier pour un échangeur thermique d'un véhicule automobile

(30) Priorität: 15.09.2006 DE 102006044155
(43) Veröffentlichungstag der Anmeldung: 02.04.2008
(73) Patentinhaber: MAHLE Behr GmbH & Co. KG, 70469 Stuttgart (DE)
(72) Erfinder: Wegner, Jürgen, Dipl.-Ing. (TU), 73054 Eislingen/Fils (DE); Von Lützau, Frank, 71364 Winnenden (DE); Oberlechner, Christian, 71638 Ludwigsburg (DE)
(74) Vertreter: Grauel, Andreas

(56) Entgegenhaltungen:
- EP-A1- 1 652 702
- EP-A2- 1 342 893
- WO-A1-03/098026
- DE-A1- 19 907 267
- FR-A1- 2 846 407

## Beschreibung

Die Erfindung betrifft eine Thermostat-Wärmetauscher-Anordnung, insbesondere für einen Wärmetauscher eines Kraftfahrzeugs gemäß dem Oberbegriff des Anspruchs 1.

In Niedertemperatur-Kühlkreisläufen wird zur Regelung des Kühlmitteistroms häufig ein Schlauchthermostat, auch als Schlauchventil bezeichnet, verwendet. Dieses kann beispielsweise kühlmittelausleitungsseitig eines Wärmetauschers, insbesondere eines Ladeluft-Kühlers, in einem Niedertemperatur-Kühlkreislauf angeordnet sein.

Derartige Thermostat-Wärmetauscher-Anordnungen lassen jedoch Wünsche in Bezug auf eine möglichst geringe Reaktionszeit offen.

Ausgehend von diesem Stand der Technik ist es Aufgabe der Erfindung, eine verbesserte Anordnung zur Verfügung zu stellen.

Diese Aufgabe wird gelöst durch eine Anordnung mit den Merkmalen des Anspruchs 1. Vorteilhafte Ausgestaltungen sind Gegenstand der Unteransprüche.

Erfindungsgemäß ist eine Thermostat-Wärmetauscher-Anordnung, für einen insbesondere in einem Neben-Kuhlmittelkreislauf eines Ladeluftkühlers, mit einem Wärmetauscher, einem Thermostat, das im Bereich einer Zu- oder Ableitung zum bzw. vom Wärmetauscher angeordnet ist und einen Kühlmittelstrom, in Abhängigkeit der Temperatur regelt, vorgesehen, wobei das Thermostat in eine Wand des Wärmetauschers integriert eingebaut ist. Durch die integrierte Ausgestaltung kann das Gehäuse des Thermostats entfallen. Ferner ermöglicht diese Ausgestaltung neben einer Verrihgerung des Bauraums auch eine verkürzte Reaktionszeit auf Temperatur-änderungen des Kühlmittels, so dass sich ein verbessertes Regelverhalten ergibt.

Die Wand, in welche das Thermostat integriert ist, ist eine Außenwand des Wärmetauschers. Eine Anbringung hieran ist in der Regel ohne großen Aufwand möglich. Ebenso ist eine relative Abdichtung möglich.

Das Thermostat ist in einer Austrittsöffnung des Wärmetauschers angeordnet. Hierbei erstreckt sich der Bereich des Thermostats, in welchem sich ein Medium mit temperaturabhängigem Volumen befindet, in die Austrittsöffnung hinein.

Das Thermostat erstreckt sich zumindest teilweise innerhalb des Wärmetauschers, so dass Bauraum nach außen gespart werden kann. Ein Teil des Thermostats erstreckt sich auch nach außen.

Beim Wärmetauscher handelt es sich um einen Wärmetauscher in Scheibenbauweise, wobei das Thermostat in einer Öffnung eines Bodenblechs des Wärmetauschers angeordnet und an demselben fixiert ist.

Besonders bevorzugt ist ein Rand des Thermostats in einer Nut angeordnet und unter Zwischenlage einer Dichtung von außen her mittels eines Jochs oder eines anderen Anschlusses einer Anschlussleitung fixiert. Eine derartige Ausgestaltung ermöglicht eine einfache Anbringung und zugleich eine einfache Abdichtung gegenüber der Umgebung.

Beim Wärmetauscher handelt es sich um einen Ladeluftkühler. Dieser wird vorzugsweise von einem Kühlmittel durchströmt, wobei der Kühlmittelkreislauf auch mit dem Motorkühlmittelkreislauf verbunden sein kann.

Im Folgenden wird die vorliegende Erfindung anhand eines Ausführungsbeispiels unter Bezugnahme auf die Zeichnung näher erläutert. Es zeigen:
- Fig. 1: eine perspektivische Ansicht eines Ausschnitts einer erfindungsgemäßen Thermostat-Wärmetauscher-Anordnung im Bereich des Thermostats mit Anschlussleitung,

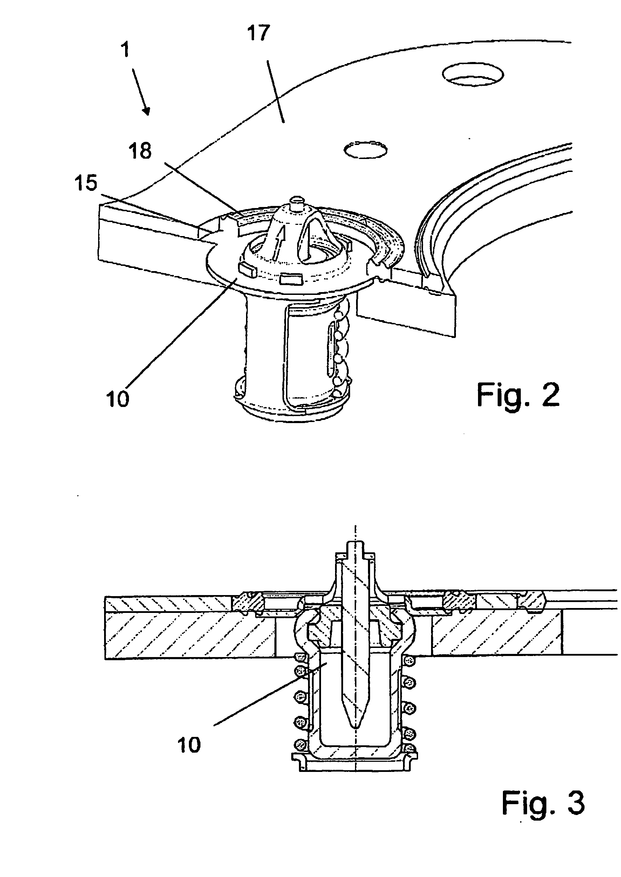

- Fig. 2: eine aufgerissene, perspektivische Ansicht durch die Thermostat-Wärmetauscher-Anordnung von Fig. 1,
- Fig. 3: eine Schnittdarstellung der Anordnung von Fig. 2, und
- Fig. 4: eine schematische Darstellung einer zweistufigen Ladeluftkühlung mit zwei Ladeluftkühlern mit erfindungsgemäßer Thermostat-Wärmetauscher-Anordnung.

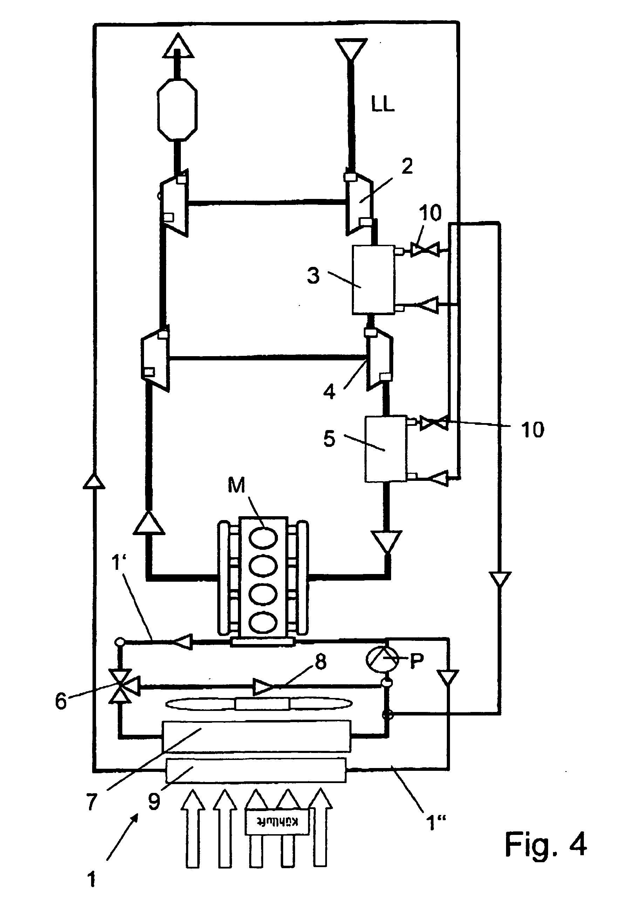

Fig. 4 zeigt eine im Prinzip bekannte zweistufige Ladeluftkühlung mit zugeordnetem Kühlmittelkreislauf 1, unterteilt in einen Haupt-Kühlmittelkreislauf 1' und einen Neben-Kühlmittelkreislauf 1", wobei der Kühlmittelkreislauf 1 der Kühlung eines Motors M und der Kühlung von Ladeluft LL dient.

Im Rahmen der Ladeluftkühlung wird die von der Umgebung angesaugte Luft durch einen ersten Turbolader 2 verdichtet, wodurch sich die Luft erwärmt. In einem nachfolgenden Niederdruck-Ladeluftkühler 3, auf den an späterer Stelle näher eingegangen wird, wird die heiße Luft abgekühlt. In einem zweiten Turbolader 4 wird die gekühlte, vorverdichtete Luft weiter verdichtet und anschließend wird die heiße Ladeluft in einem nachfolgenden Hochdruck-Ladeluftkühler 5 gekühlt, bevor sie zum Motor M gelangt und in demselben verbrannt wird. Das so erzeugte Abgas durchströmt zwei Turbinen zur Energierückgewinnung und gelangt durch einen Partikelfilter nach außen.

Der Kühlmittelkreislauf 1 wird von einer Pumpe P umgewälzt, wobei sich der Kreislauf direkt im Anschluss an die Pumpe P aufteilt in den Haupt-Kühlmittelkreislauf 1' und den Neben-Kühlmittelkreislauf 1". lm Haupt-Kühlmittelkreislauf 1' strömt das Kühlmittel zuerst durch den Motor M zu einem Ventil 6, weiches das Kühlmittel in Abhängigkeit der Temperatur und des Motorkühlbedarts durch einen ersten Kühlmittelkühler 7 oder durch einen Bypass 8 lenkt. Nach dem Kühlmittelkühler 7 werden die beiden parallelen Zweige des Haupt-Kühlmittelkreislaufs 1' wieder zusammengeführt und das Kühlmittel gelangt zur Pumpe P.

Im Neben-Kühlmittelkreislauf 1" wird das gesamte, denselben durchströmende Kühlmittel zuerst durch einen zweiten Neben-Kühlmittelkühler 9 geleitet, der parallel zum ersten Kühlmittelkühler angeordnet ist. Beide Kühlmittelkühler 7 und 9 werden mit Hilfe eines Gebläses von Kühlluft aus der Umgebung durchströmt, welche die Wärme aus dem Kühlmittel aufnimmt. Das gekühlte Kühlmittel des Neben-Kühlmittelkreislaufs 1" wird im Anschluss an den Kühlmittelkühler 9 in Abhängigkeit des Kühlbedarfs auf die beiden Ladeluftkühler 3 und 5 über parallel geschaltete Leitungen verteilt und durchströmt dieselben. Die Regelung des Kühlmittelstroms durch die beiden Ladeluftkühler 3 und 5 erfolgt mit Hilfe jeweils eines in jeden der Ladeluftkühler 3 und 5 integrierten Thermostats 10, das im Bereich der Austrittsöffnung 11 des jeweiligen Ladeluftkühlers 3 bzw. 5 angeordnet ist. Im Anschluss an die Ladeluftkühler 3 und 5 werden die beiden Zweige des Neben-Kühlmittelkreislaufs 1" wieder zusammengeführt und vereinigen sich mit dem Haupt-Kühlmittelkreislauf 1' in einem Bereich nach dem Kühlmittelkühler 7 und vor dem Einzweigen des Bypasses 8.

Im Folgenden wird die integrierte Anordnung des Thermostaten 10 in den Ladeluftkühler 3 näher erläutert. Die Ausgestaltung der Thermostat-Wärmetauscher-Anordnung im Falle des zweiten Ladeluftkühlers 5 ist entsprechend, so dass hierauf im Folgenden nicht näher eingegangen wird.

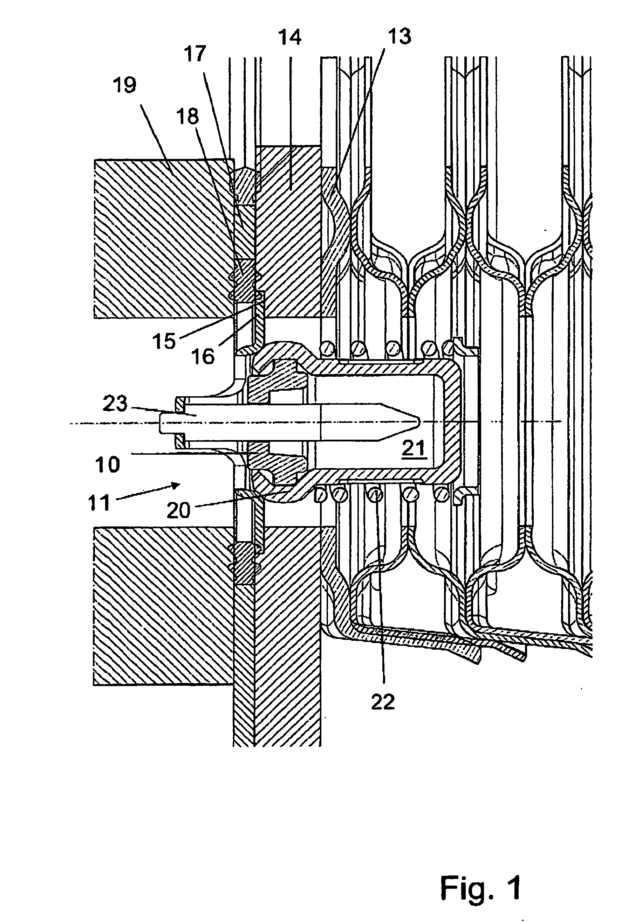

Der Ladeluftkühler 3 ist ein Ladeluftkühler in Scheibenbauweise mit einer Mehrzahl gebogener Scheiben 13, die zusammengesetzt sind und Strömungswege zur Wärmeübertragung zwischen sich bilden. Die unterste Scheibe 13, in Fig. 1 links dargestellt, wird im Folgenden auch als Bodenblech bezeichnet und ist zur Versteifung etwas stärker ausgebildet. Wie aus Fig. 1 ersichtlich, ist das Thermostat 10 in der Mittellängsachse der Kühlmittel-Austrittsöffnung 11 angeordnet, wobei es sich mit einem etwa der Hälfte bis in das zweite Scheibenpaar hinein in den Ladeluftkühler 3 erstreckt. Die andere Hälfte des Thermostats 10 steht über die Außenfläche des Bodenblechs über.

Am Bodenblech ist eine Anschlussplatte 14 angebracht, vorliegend angelötet, die eine kreisförmige Öffnung in Verlängerung der Austrittsöffnung 11 aufweist. Zur Aufnahme des Thermostats 10 weist die Anschlussplatte 14 außenseitig eine ringförmige Nut 15 um die Austrittsöffnung 11 auf. In dieser Nut 14 ist ein Flansch 16 des Thermostats 10 angeordnet. Um eine sichere Abdichtung gegenüber der Umgebung zu ermöglichen, ist ein an einer Dichtplatte 17 angeordnetes, ringförmiges, vorliegend mit zwei Wulsten ausgebildetes Dichtelement 18 in die Nut 14 eingelegt und vorliegend entlang des Außenumfangs eingeklebt, das sich bis über den äußeren Rand des Flansches 16 vom Thermostat 10 erstreckt. Die Dichtplatte 17 samt Dichtelement 18 wird von oben durch ein Joch 19 gegen die Anschlussplatte 14 gepresst, wofür in der Dichtplatte 17 Bohrungen oder andere Durchgangsöffnungen für durch die Dichtplatte 17 und das Joch 19 gesteckte und in die Anschlussplatte 14 geschraubte Schrauben aufweist. An das Joch 19 ist eine Anschlussleitung (nicht dargestellt) angeschlossen, über welche das Kühlmittel zurück zum gemeinsamen Teil des Kühlmittelkreislaufs 1 geführt wird.

Die Funktion des Thermostats 10 ist Folgende: strömt - ausgehend vom maximal geöffneten Zustand des Thermostats 10 - kühleres Kühlmittel durch einen zwischen einem Bereich benachbart des Flansches 16 vom Thermostat 10 und einem beweglichen, in Längsrichtung der Mittellängsachse der Austrittsöffnung 11 verschiebbaren Teils 20 des Thermostats 10, so kühlt sich ein in einer Kammer 21 im verschiebbaren Teil 20 des Thermostats enthaltenes Medium ab, wodurch sich sein Volumen verändert, vorzugsweise verringert, so dass unterstützt durch die Kraft einer Feder 22 ein Stift 23 weiter in die Kammer 21 eindringen kann, und der verschiebbare Teil 20 sich dem Bereich benachbart des Flansches 16 in Abhängigkeit der Temperatur annähert. Bei einer vorgegebenen minimalen Temperatur des Kühlmittels liegen der verschiebbare Teil 20 und der Bereich benachbart des Flansches 16 aneinander an, so dass der Durchfluss an Kühlmittel minimiert ist. Das Thermostat 10 weist gemäß dem vorliegenden Ausführungsbeispiel in seiner geschlossenen Stellung einen Leckagestrom von 100 bis 200 I/h auf, so dass auch in diesem Zustand eine ausreichend geringe Reaktionszeit auf Temperaturänderungen gewährleistet werden kann.

Die Ausgestaltung des Thermostats muss nicht notwendigerweise der zuvor beschriebenen Ausgestaltung entsprechen.

Gemäß einer Variante des Ausführungsbeispiels, die nicht in der Zeichnung dargestellt ist, entfällt die Anschlussplatte. In diesem Fall wird die Funktion der Anschlussplatte durch das Bodenblech, d.h. die unterste Scheibe, übernommen, das etwas dicker ausgebildet ist.

An Stelle von einer zweistufigen Verdichtung der Ladeluft kann der Wärmetauscher, in den ein Thermostat integriert ist, beispielsweise auch in einem Wärmetauscher, der in einer einstufigen Ladeluftkühlung vorgesehen ist, verwendet werden. Ferner kann er beispielsweise auch nur in einer zweiten Kühlstufe verwendet werden, bspw. bei einer Luftkühlung im Falle der ersten Kühlstufe.

## Patentansprüche

1. Thermostat-Wärmetauscher-Anordnung, mit einem Ladeluftkühler und einem Thermostat (10), das im Bereich einer Ableitung vom Ladeluftkühler angeordnet ist und einen Kühlmittelstrom in Abhängigkeit der Temperatur regelt, wobei das Thermostat (10) in eine Wand des Ladeluftkühlers integriert eingebaut ist, und in einer Austrittsöffnung des Ladeluftkühlers angeordnet ist, **dadurch gekennzeichnet, dass** der Ladeluftkühler ein Ladeluftkühler in Scheibenbauweise mit einer Mehrzahl gebogener Scheiben, die zusammengesetzt sind und Strömungswege zur Wärmeübertragung zwischen sich bilden, ist, wobei das Thermostat (10) in einer Öffnung eines Bodenblechs des Ladeluftkühlers angeordnet und an demselben fixiert ist, wobei das Thermostat in der Mittellängsachse der Kühlmittelaustrittsöffnung angeordnet ist und sich mit etwa der Hälfte bis in das zweite Scheibenpaar hinein in den Ladeluftkühler erstreckt und die andere Hälfte des Thermostats über die Außenfläche des Bodenblechs über steht.

2. Thermostat-Wärmetauscher-Anordnung nach Anspruch 1, **dadurch gekennzeichnet, dass** die Wand eine Außenwand ist.

3. Thermostat-Wärmetauscher-Anordnung nach einem der vorhergehenden Ansprüche, **dadurch gekennzeichnet, dass** ein Rand des Thermostats (10) in einer Nut angeordnet ist und unter Zwischenlage einer Dichtung (18) von außen her mittels eines Jochs (19) oder eines anderen Anschlusses einer Anschlussleitung fixiert ist.

4. Ladeluftkühler, **gekennzeichnet durch** mindestens ein integriert in den Ladeluftkühler (3, 5) entsprechend einer Thermostat-Wärmetauscher-Anordnung gemäß einem der Ansprüche 1 bis 3 angeordnetes Thermostat (10).

## Claims

1. A thermostat/heat exchanger arrangement, comprising a charge air cooler and a thermostat (10) that is arranged in the region of a discharge line from the charge air cooler and controls a coolant flow depending on the temperature, wherein the thermostat (10) is incorporated in an integrated manner in a wall of the charge air cooler and is arranged in an exit opening of the charge air cooler, **characterised in that** the charge air cooler is a charge air cooler of plate-type design with a plurality of curved plates that are assembled together and form flow paths therebetween for heat transfer, wherein the thermostat (10) is arranged in an opening of a base panel of the charge air cooler and is fixed thereto, wherein the thermostat is arranged in the middle longitudinal axis of the coolant exit opening and extends over approximately half of its extent into the charge air cooler until into the second plate pair, and the other half of the thermostat protrudes beyond the outer surface of the base panel.

2. The thermostat/heat exchanger arrangement according to claim 1, **characterised in that** the well is an outer wall.

3. The thermostat/heat exchanger arrangement according to one of the preceding claims, **characterised in that** an edge of the thermostat (10) is arranged in a groove and is fixed from the outside by means of a yoke (19) or another connection of a connecting line with interpositioning of a seal (18).

4. A charge air cooler, **characterised by** at least one thermostat (10) integrated in the charge air cooler (3, 5) in accordance with a thermostat/heat exchanger arrangement according to one of claims 1 to 3.

## Revendications

1. Agencement d'échangeur de chaleur à thermostat, comprenant un refroidisseur d'air de suralimentation et un thermostat (10) qui est disposé dans la zone d'une conduite d'évacuation partant du refroidisseur d'air de suralimentation et régule un flux de fluide de refroidissement en fonction de la température, où le thermostat (10) est monté en étant intégré dans une paroi du refroidisseur d'air de suralimentation et est disposé dans une ouverture de sortie du refroidisseur d'air de suralimentation,
**caractérisé en ce que** le refroidisseur d'air de suralimentation est un refroidisseur d'air de suralimentation du type à plaques comprenant une pluralité de plaques incurvées qui sont assemblées, et il se forme, entre ces plaques, des trajets d'écoulement servant au transfert de chaleur, où le thermostat (10) est disposé dans une ouverture d'une tôle de fond du refroidisseur d'air de suralimentation et fixé sur cette même tôle de fond, où le thermostat est disposé dans l'axe longitudinal médian de l'ouverture de sortie du fluide de refroidissement et s'étend, sur à peu près la moitié de la dimension dudit thermostat, jusqu'à la deuxième paire de plaques à l'intérieur dru refroidisseur d'air de suralimentation, et l'autre moitié du thermostat est en saillie par rapport à la surface extérieure de la tôle de fond.

2. Agencement d'échangeur de chaleur à thermostat selon la revendication 1, **caractérisé en ce que** la paroi est une paroi extérieure.

3. Agencement d'échangeur de chaleur à thermostat selon l'une ou l'autre des revendications précédentes, **caractérise en ce qu'**un bord du thermostat (10) est disposé dans une rainure et, grâce à l'interposition d'un élément d'étanchéité (18), effectuée de l'extérieur, ledit bord du thermostat est fixé au moyen d'un étrier (19) ou d'un autre raccordement d'une conduite de raccordement.

4. Refroidisseur d'air de suralimentation **caractérisé par** au moins un thermostat (10) disposé de façon intégrée dans le refroidisseur d'air de suralimentation (3, 5) et correspondant à un agencement d'échangeur de chaleur à thermostat selon l'une quelconque des revendications 1 à 3.
